# EUROPEAN PATENT APPLICATION

(11) **EP 3 427 627 A2**
(43) Date of publication of application: **16.01.2019**
(21) Application number: 18183401.1
(22) Date of filing: 13.07.2018
(51) Int. Cl.: A47L 11/40

(54) **A ROBOT CLEANER AND DRIVING CONTROL METHOD THEREOF**

(30) Priority: 14.07.2017 KR 20170089549
(71) Applicant: Everybot Inc., Gyeonggi-do 461-831 (KR)
(72) Inventor: Jung, Woo Chul, 18447 Gyeonggi-do (KR); Kim, Bong Yun, 14004 Gyeonggi-do (KR)
(74) Representative: Ziebig & Hengelhaupt Patentanwälte PartG mbB

(57) **Abstract**

Disclosed herein is a robot cleaner. The robot cleaner includes: a main body; a driving unit provided in the main body and supplying power for traveling of the robot cleaner; a bumper formed on an outer circumference of the main body and protecting the main body from an external impact; a distance measuring sensor sensing a distance from an object positioned therebelow; and a control unit determining a traveling state of the robot cleaner as one of an obstacle collision state, a drop point adjacent state, and a normal traveling state by using distance information sensed by the distance measuring sensor.

## Description

### CROSS-REFERENCE TO RELATED APPLICATION

This application claims the priority and benefit of Korean Patent Application No. 10-2017-0089549 filed on July 14 2017, with the Korean Intellectual Property Office, the disclosure of which is incorporated herein by reference.

### BACKGROUND OF THE INVENTION

### 1. Field of the Invention

The present invention relates to a robot cleaner and a driving control method thereof, and more particularly, to a robot cleaner capable of performing wet cleaning while traveling autonomously, and a driving control method thereof.

### 2. Description of the Related Art

With the development of industrial technology, various devices are being automated. As is well known, a robot cleaner is an apparatus for automatically cleaning an area to be cleaned by suctioning foreign matter such as dust from a cleaning surface while wiping a foreign object on a surface to be cleaned while traveling on a self-cleaning area without an operation by a user.

In general, such a robot cleaner may include a vacuum cleaner that performs cleaning using a suction force using a power source such as electricity.

The robot cleaner including such a vacuum cleaner has a limitation in that the robot can not remove the foreign matter, stains, and the like adhering to the surface to be cleaned. Therefore, in recent years, a robot cleaner capable of performing wet cleaning with a mop attached to the robot cleaner has emerged.

However, a wet cleaning scheme using a general robot cleaner is merely a simple scheme of attaching the mop or the like to a lower portion of the existing vacuum cleaner and thus the wet cleaning scheme has a disadvantage that an effect of removing the foreign matter is low and efficient wet cleaning cannot be performed.

Particularly, since the wet cleaning scheme of the general robot cleaner travels by using the existing suction type vacuum cleaner moving scheme and avoiding scheme of an obstacle as it is, even if the dust scattered on the cleaned surface is removed, the foreign object adhering to the area to be cleaned surface cannot be easily removed.

Further, in the case of a mop attachment structure of the general robot cleaner, a frictional force with the ground is increased by a mop surface and a separate driving force is thus required to move a wheel, and as a result, battery consumption increases.

### SUMMARY OF THE INVENTION

An object of the present invention to provide a robot cleaner that travels by using rotational force of a pair of rotary members as a moving power source of the robot cleaner and performs wet cleaning by using a cleaner attached to the rotary member and a driving control method thereof.

Further, another object of the present invention is to provide a robot cleaner capable of using distance information of a distance measuring sensor for detecting a distance to a target as information for determining whether the robot cleaner collides with an obstacle, whether the robot cleaner is adjacent a drop point is adjacent, and whether the robot cleaner normally travels, and a driving control method thereof.

According to an exemplary embodiment of the present invention, a robot cleaner may include: a main body; a driving unit provided in the main body and supplying power for traveling of the robot cleaner; a bumper formed on an outer circumference of the main body and protecting the main body from an external impact; a distance measuring sensor sensing a distance from an object positioned therebelow; and a control unit determining a traveling state of the robot cleaner as one of an obstacle collision state, a drop point adjacent state, and a normal traveling state by using distance information sensed by the distance measuring sensor.

In addition, the distance measuring sensor may be an optical sensor that irradiates light downward and senses a distance from the object positioned below the sensor based on the irradiated light.

Further, the distance measuring sensor may include a first optical sensor formed at a front left side, a second optical sensor formed at a front right side, a third optical sensor formed at a rear left side, and a fourth optical sensor formed at a rear right side based on a traveling direction of the robot cleaner.

In addition, the bumper may be constituted by an outer surface and an inner surface, a bumper-side sensor accommodating unit for accommodating the optical sensor may be formed on the inner surface of the bumper, and the optical sensor installed in the bumper-side sensor accommodating unit may move in conjunction with movement of the bumper.

Moreover, a light non-penetrating member of a material through which the light of the optical sensor is not able to penetrate may be formed on a bottom surface of the main body, and when the bumper collides with an obstacle and moves inward toward the main body while the robot cleaner travels, the optical sensor may move inward toward the main body and may be positioned above the light non-penetrating member and the optical sensor may sense a distance between the light non-penetrating member and the optical sensor.

In addition, a light penetrating member of a material through which the light of the optical sensor is able to penetrate is projected inward on a lower end of the bumper-side sensor accommodating unit, and when the bumper does not collide with the obstacle and maintains an initial location while the robot cleaner travels, the optical sensor may irradiate the light onto a floor surface by penetrating the light penetrating member and sense a distance between the optical sensor and the floor surface based on the light irradiated onto the floor surface.

Further, a main body-side sensor accommodating unit for accommodating the optical sensor may be formed in the main body and the optical sensor installed in the main body-side sensor accommodating unit may not move in conjunction with movement of the bumper.

In addition, the light penetrating member of a material through which the light of the optical sensor is able to penetrate may be formed on a bottom surface of the main body and when the bumper does not collide with the obstacle and maintains the initial location while the robot cleaner travels, the optical sensor may irradiate the light onto the floor surface by penetrating the light penetrating member and sense a distance between the optical sensor and the floor surface based on the light irradiated onto the floor surface.

Moreover, the light non-penetrating member of the material through which the light of the optical sensor is not able to penetrate may be formed on the lower end of the bumper, and when the bumper collides with the obstacle and moves inward toward the main body while the robot cleaner travels, the light non-penetrating member may move inward toward the main body and may be positioned below the optical sensor and the optical sensor may sense a distance between the light non-penetrating member and the optical sensor.

In addition, when power is applied to the robot cleaner, the control unit may calculate a distance value between the optical sensor and the floor surface at a corresponding location to set a reference for traveling and avoiding.

Further, when the robot cleaner starts traveling, the control unit calculates a distance value up to the object based on sensing information of the optical sensor and compares the calculated distance value and the set reference value to determine whether the robot cleaner is in an obstacle collision state, in a drop point adjacent state, or in a normal traveling state.

In addition, the control unit may determine that the robot cleaner is in the normal traveling state when the calculated distance value is equal to the predetermined reference value, determine that the robot cleaner is in the obstacle collision state when the calculated distance value is smaller than the predetermined reference value, and determine that the robot cleaner is in the drop point adjacent state when the calculated distance value is larger than the predetermined reference value.

Further, the bumper may include a first bumper formed on a first outer circumference of the main body, and a second bumper formed on a second outer circumference of the main body separately from the first bumper.

In addition, when it is determined that the robot cleaner collides with the obstacle or is adjacent to the drop point, the control unit may control the robot cleaner to avoid the obstacle or the drop point.

Further, when it is determined that the robot cleaner is in the normal traveling state, the control unit may control to select one of a plurality of cleaning modes.

In addition, the robot cleaner may further include first and second rotary members which rotate around first and second rotary axes, respectively by power of the driving unit and to which cleaners for wet cleaning are fixable, respectively, and when the cleaners for the wet cleaning are fixed to the first and second rotary members, respectively, the robot cleaner may travel according to frictional force between a surface to be cleaned and each of the attached cleaners, which is generated according to rotation of each of the fixed cleaners.

Meanwhile, according to another exemplary embodiment of the present invention, a driving control method of a robot cleaner including a main body, a bumper formed on an outer circumference of the main body and protecting the main body from an external impact, and a distance measuring sensor may include: traveling the robot cleaner by using a driving unit supplying power for traveling; sensing a distance from an object positioned below the sensor by using the distance measuring sensor while the robot cleaner travels; and determining a traveling state of the robot cleaner as one of an obstacle collision state, a drop point adjacent state, and a normal traveling state by using distance information of the distance measuring sensor.

In addition, the distance measuring sensor may be an optical sensor that irradiates light downward and senses a distance from the object positioned below the sensor based on the irradiated light.

Further, the bumper may be constituted by an outer surface and an inner surface, a bumper-side sensor accommodating unit for accommodating the optical sensor may be formed on the inner surface of the bumper, and the optical sensor installed in the bumper-side sensor accommodating unit may move in conjunction with movement of the bumper.

Moreover, a light non-penetrating member of a material through which the light of the optical sensor is not able to penetrate may be formed on a bottom surface of the main body, and when the bumper collides with an obstacle and moves inward toward the main body while the robot cleaner travels, the optical sensor may move inward toward the main body and may be positioned above the light non-penetrating member and the optical sensor may sense a distance between the light non-penetrating member and the optical sensor.

In addition, a light penetrating member of a material through which the light of the optical sensor is able to penetrate is projected inward on a lower end of the bumper-side sensor accommodating unit, and when the bumper does not collide with the obstacle and maintains an initial location while the robot cleaner travels, the optical sensor may irradiate the light onto a floor surface by penetrating the light penetrating member and sense a distance between the optical sensor and the floor surface based on the light irradiated onto the floor surface.

Further, a main body-side sensor accommodating unit for accommodating the optical sensor may be formed in the main body and the optical sensor installed in the main body-side sensor accommodating unit may not move in conjunction with movement of the bumper.

In addition, the light penetrating member of a material through which the light of the optical sensor is able to penetrate is formed on a bottom surface of the main body and when the bumper does not collide with the obstacle and maintains the initial location while the robot cleaner travels, the optical sensor may irradiate the light onto the floor surface by penetrating the light penetrating member and sense a distance between the optical sensor and the floor surface based on the light irradiated onto the floor surface.

Moreover, the light non-penetrating member of the material through which the light of the optical sensor is not able to penetrate may be formed on the lower end of the bumper, and when the bumper collides with the obstacle and moves inward toward the main body while the robot cleaner travels, the light non-penetrating member may move inward toward the main body and may be positioned below the optical sensor and the optical sensor may sense a distance between the light non-penetrating member and the optical sensor.

Further, the method may further include calculating a distance value between the optical sensor and the floor surface at a corresponding location to set a reference for traveling and avoiding when power is applied to the robot cleaner.

Further, in the determining, when the robot cleaner starts traveling, a distance value up to the object is calculated based on sensing information of the optical sensor and the calculated distance value and the set reference value are compared with each other to determine whether the robot cleaner is in an obstacle collision state, in a drop point adjacent state, or in a normal traveling state.

In addition, in the determining, it may be determined that the robot cleaner is in the normal traveling state when the calculated distance value is equal to the predetermined reference value, it may be determined that the robot cleaner is in the obstacle collision state when the calculated distance value is smaller than the predetermined reference value, and it may be determined that the robot cleaner is in the drop point adjacent state when the calculated distance value is larger than the predetermined reference value.

Meanwhile, according to yet another exemplary embodiment of the present invention, a robot cleaner may include: a driving unit supplying power for traveling of the robot cleaner; an optical sensor irradiating light to a target and sensing a distance from the target; and a control unit controlling the driving unit to avoid a predetermined object or maintain a traveling state according to distance information of the optical sensor while the robot cleaner travels.

In addition, the control unit may control the driving unit so that the robot cleaner maintains the traveling state when distance information of the optical sensor is within a predetermined distance range and control the driving unit so that the robot cleaner performs avoidance traveling of the predetermined object when the distance information of the optical sensor is out of the predetermined distance range.

Further, the predetermined object may include the obstacle and the drop point.

In addition, the robot cleaner may further include a bumper formed on an exterior of a main body of the robot cleaner and protecting the main body from external impact and moving inward or outward according to a collision with the obstacle, and the distance information of the optical sensor may be changed depending on movement of the bumper.

In addition, the optical sensor may be installed in the bumper, and when the bumper does not collide with the obstacle and maintains an initial location while the robot cleaner travels, the optical sensor may sense a distance between a floor surface and the optical sensor.

Further, when the bumper collides with the obstacle and moves inward toward the main body while the robot cleaner travels, the optical sensor may sense a distance between the main body and the optical sensor.

In addition, the optical sensor may be installed in the main body, and when the bumper does not collide with the obstacle and maintains the initial location while the robot cleaner travels, the optical sensor may sense the distance between the floor surface and the optical sensor.

Further, when the bumper collides with the obstacle and moves inward toward the main body while the robot cleaner travels, the optical sensor may sense the distance between the bumper and the optical sensor.

Meanwhile, according to still yet another exemplary embodiment of the present invention, a driving control method of a robot cleaner including an optical sensor irradiating light to a target and sensing a distance from the target may further include: traveling the robot cleaner by using a driving unit supplying power for traveling; sensing a distance up to the target by using the optical sensor while the robot cleaner travels; and controlling the driving unit to avoid a predetermined object or maintain a traveling state according to distance information of the optical sensor while the robot cleaner travels.

In addition, in the controlling, the driving unit may be controlled so that the robot cleaner maintains the traveling state when distance information of the optical sensor is within a predetermined distance range, and the driving unit may be controlled so that the robot cleaner performs avoidance traveling of the predetermined object when the distance information of the optical sensor is out of the predetermined distance range.

Further, the robot cleaner may include a bumper in which the optical sensor is installed, and in the sensing, when the bumper does not collide with the obstacle and maintains the initial location while the robot cleaner travels, the optical sensor may sense the distance between the floor surface and the optical sensor.

In addition, in the sensing, when the bumper collides with the obstacle and moves inward toward the main body while the robot cleaner travels, the optical sensor may sense a distance between the main body and the optical sensor.

Further, the optical sensor may be installed in the main body of the robot cleaner, and in the sensing, when the bumper does not collide with the obstacle and maintains the initial location while the robot cleaner travels, the optical sensor may sense the distance between the floor surface and the optical sensor.

In addition, in the sensing, when the bumper collides with the obstacle and moves inward toward the main body while the robot cleaner travels, the optical sensor may sense the distance between the bumper and the optical sensor.

According to various exemplary embodiments of the present invention, the robot cleaner can travel while more effectively removing foreign objects and the like adhering to the surface to be cleaned through friction between a first cleaner and a second cleaner which perform rotary motions by the rotary motions of a first rotary member and a second rotary member, respectively and the surface to be cleaned.

In addition, according to various exemplary embodiments of the present invention, the robot cleaner can perform cleaning traveling while drawing various patterns and perform efficient wet cleaning by selecting a cleaning pattern suitable for a topographical object.

Further, according to various exemplary embodiments of the present invention, by controlling at least one of a rotating direction and a rotating speed of the rotary member in accordance with a size of a load applied to the rotary member, it is possible to remove the foreign objects on a surface to be cleaned which generates a large load on the rotary member such as stains, water, and the like on the surface to be cleaned, which the robot cleaner may meet while traveling and to escape from an area where the foreign objects are positioned.

Moreover, according to various exemplary embodiments of the present invention, since it can be determined whether the robot cleaner collides with an obstacle, whether the robot cleaner is adjacent to a drop point, and whether the robot cleaner normally travels using a distance measuring sensor having a single function to detect a distance up to a target, it is possible to reduce costs, increase production efficiency, and secure product price competitiveness by minimizing a configuration of the sensor.

### BRIEF DESCRIPTION OF THE DRAWINGS

FIG. 1 is a perspective view of a robot cleaner according to an exemplary embodiment of the present invention.
FIG. 2 is an exploded perspective view of a robot cleaner according to an exemplary embodiment of the present invention.
FIG. 3 is a bottom view of a robot cleaner according to an exemplary embodiment of the present invention.
FIG. 4 is a cross-sectional view of a robot cleaner according to an exemplary embodiment of the present invention.
FIG. 5 is a block diagram illustrating a robot cleaner according to an exemplary embodiment of the present invention.
FIG. 6 is a table showing a rotation control table of a rotary member for implementing straight traveling of a robot cleaner according to an exemplary embodiment of the present invention.
FIG. 7 is a diagram for describing a straight traveling operation of a robot cleaner according to an exemplary embodiment of the present invention.
FIG. 8 is a plan cross-sectional view illustrating an installation location of an optical sensor of a robot cleaner according to an exemplary embodiment of the present invention.
FIG. 9 is a plan cross-sectional view illustrating operations of a bumper and an optical sensor depending on whether a robot cleaner and an obstacle collide with each other according to an exemplary embodiment of the present invention.
FIG. 10 is a front cross-sectional view illustrating operations of a bumper and an optical sensor depending on whether a robot cleaner and an obstacle collide with each other according to an exemplary embodiment of the present invention.
FIG. 11 is a plan cross-sectional view illustrating an installation location of an optical sensor of a robot cleaner according to another exemplary embodiment of the present invention.
FIG. 12 is a flowchart illustrating a driving control method of a robot cleaner according to an exemplary embodiment of the present invention.
FIG. 13 is a flowchart more specifically illustrating the driving control method according to FIG. 12.

### DETAILED DESCRIPTION

The following description illustrates only a principle of the present invention. Therefore, those skilled in the art may implement the principle of the present invention and invent various apparatuses included in the spirit and scope of the present invention although not clearly described or illustrated in the present specification. In addition, it is to be understood that all conditional terms and exemplary embodiments mentioned in the present specification are obviously intended only to allow those skilled in the art to understand a concept of the present invention in principle, and the present invention is not limited to exemplary embodiments and states particularly mentioned as such.

Further, it is to be understood that all detailed descriptions mentioning specific exemplary embodiments of the present invention as well as principles, aspects, and exemplary embodiments of the present invention are intended to include structural and functional equivalences thereof. Further, it is to be understood that these equivalences include an equivalence that will be developed in the future as well as an equivalence that is currently well-known, that is, all elements invented so as to perform the same function regardless of a structure.

Accordingly, for example, it should be understood that the block diagram herein represent conceptual views of exemplary circuits embodying the principle of the present invention. Similarly, it is to be understood that all flow charts, state transition diagrams, pseudo-codes, and the like, illustrate various processes that may be tangibly embodied in a computer readable medium and that are executed by computers or processors regardless of whether or not the computers or the processors are clearly illustrated.

Functions of various elements including processors or functional blocks represented as concepts similar to the processors and illustrated in the accompanying drawings may be provided using hardware having capability to execute appropriate software as well as dedicated hardware. When the functions are provided by the processors, they may be provided by a single dedicated processor, a single shared processor, or a plurality of individual processors, and some of them may be shared with each other.

Further, the explicit use of terms such as processor, control, or similar concepts should not be interpreted exclusively as hardware capable of executing software, and may implicitly include, without limitation, digital signal processor (DSP) hardware, a ROM, a RAM, and a non-volatile memory for storing the software. Other well-known hardware may also be included.

In the claims of the present specification, the components represented as means for performing the functions described in the Detailed Description are intended to include all methods that perform functions including all types of software, including, for example, a combination of circuit elements performing the function or firmware/microcode etc. and is coupled with an appropriate circuit for executing the software so as to perform the functions. It is to be understood that the present invention as defined by the appended claims encompasses any means capable of providing such functionality, as the functions provided by the various listed means are combined and combined with the manner in which the claims require.

The above-mentioned objects, features, and advantages will become more obvious from the following detailed description associated with the accompanying drawings. Therefore, those skilled in the art to which the present invention pertains may easily practice a technical idea of the present invention. Further, in describing the present invention, in the case in which it is decided that a detailed description of a well-known technology associated with the present invention may unnecessarily make the gist of the present invention unclear, it will be omitted.

Hereinafter, various exemplary embodiments of the present invention will be described in detail with reference to the accompanying drawings.

Hereinafter, various exemplary embodiments of the present invention will be described in detail with reference to the accompanying drawings.

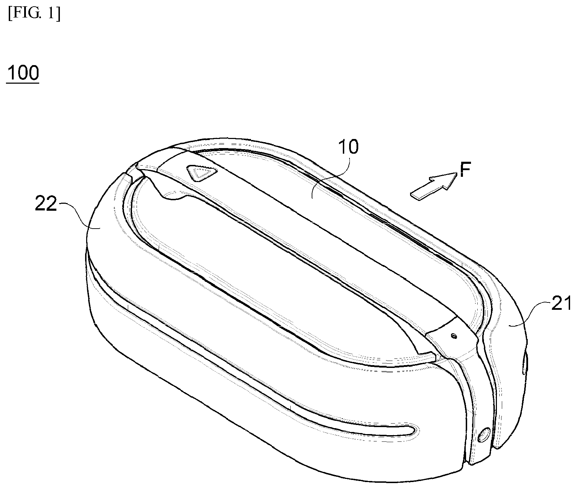

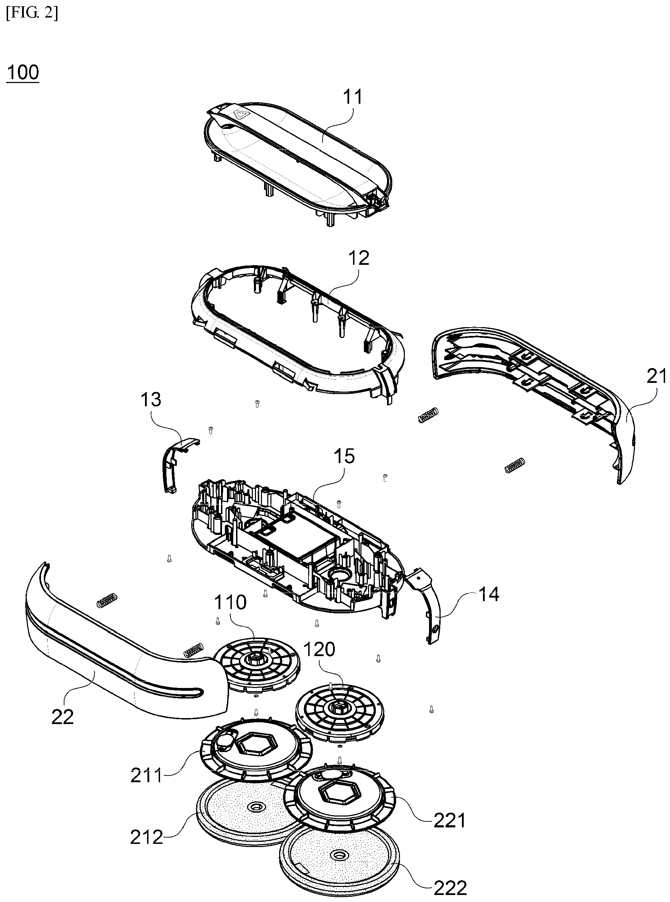

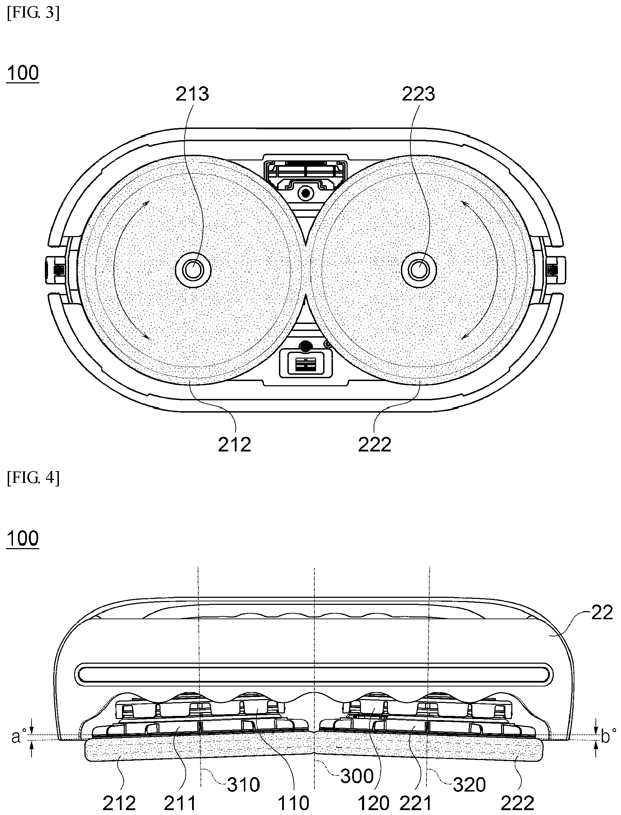

FIGS. 1 to 4 are diagrams for describing a structure of a robot cleaner according to an exemplary embodiment of the present invention. More specifically, FIG. 1 is a perspective view of a robot cleaner according to an exemplary embodiment of the present invention, FIG. 2 is an exploded perspective view of a robot cleaner according to an exemplary embodiment of the present invention, FIG. 3 is a bottom view of a robot cleaner according to an exemplary embodiment of the present invention, and FIG. 4 is a cross-sectional view of a robot cleaner according to an exemplary embodiment of the present invention.

Referring to FIGS. 1 to 4, a robot cleaner 100 according to the present invention may be configured to structurally include a main body 10 forming an outer appearance of the robot cleaner 100, bumpers 21 and 22 formed on an outer circumference of the main body 10 and protecting the main body 10 from external impact, a driving unit 150 installed in the main body 10 and supplying power for driving the robot cleaner 100, first and second rotary members 110 and 120 that rotate in connection with the driving unit 150, and a power supply unit 190 installed in the main body 10. In addition, the robot cleaner 110 may include liquid storing units 211 and 221 for storing a liquid and cleaners 212 and 222.

The robot cleaner 100 may travel while performing wet cleaning by using the cleaners 212 and 222 for the wet cleaning. Here, the wet cleaning may mean cleaning of wiping a surface to be cleaned using the cleaners 212 and 222 and may include, for example, cleaning using a dry mop or the like, cleaning using a wet mop or the like, and the like.

The main body 10 may be formed by combining a plurality of structures. Here, the plurality of structures may include an upper structure 11 forming an upper outer appearance of the main body 10, a middle structure 12 forming a middle outer appearance of the main body 10, side structures 13 and 14 forming a side outer appearance of the main body 10, and a lower structure 15 forming a lower appearance of the main body 10.

The driving unit 150 may include a first driving unit 151 installed inside the main body 10 and coupled with the first rotary member 110 and a second driving unit 152 installed inside the main body 10 and coupled with the second rotary member 120. Here, the driving unit 150 may be implemented to include a motor, a gear, an assembly, and the like.

The first rotary member 110 is coupled to the first driving unit 151 to transmit power by the first driving unit 151 and to rotate around a first rotary axis 310 by the power. In addition, the second rotary member 120 is coupled to the second driving unit 152 to transmit power by the second driving unit 152 and to rotate around a second rotary axis 320 by the power.

Here, the first rotary member 110 and the second rotary member 120 may be implemented to protrude toward the surface to be cleaned. Accordingly, in using the robot cleaner 100, a user may easily attach or detach the liquid storage units 211 and 221 to be described below to or from the rotary members 110 and 120.

Specifically, the first liquid storage unit 211 may be detachably coupled to the first rotary member 110 to rotate in conjunction with the rotation of the first rotary member 110. The first liquid storage unit 211 may store the liquid for the wet cleaning and provide the stored liquid to the first cleaner 212.

Further, the second liquid storage unit 221 may be detachably coupled to the second rotary member 120 to rotate in conjunction with the rotation of the second rotary member 120. In addition, the second liquid storage unit 221 may store the liquid for the wet cleaning and provide the stored liquid to the second cleaner 222.

In addition, the liquids stored in the first liquid storage unit 211 and the second liquid storage unit 221 may include a liquid such as 'water' or a 'mixture of at least one of 'soap, a solvent, a fragrance, a disinfectant, an emulsifier, a desiccant, and a grinding particle' and the water'.

Meanwhile, the first cleaner 212 and the second cleaner 222 for the wet cleaning may be fixed to the first liquid storage unit 211 and the second liquid storage unit 221, respectively. Here, the first cleaner 212 and the second cleaner 222 may be made of a fabric material such as cloth capable of cleaning various surfaces to be cleaned, such as a microfiber cloth, a mop, a nonwoven fabric, a brush, or the like so as to remove the foreign objects adhering to a floor through the rotation. Further, the first cleaner 212 and the second cleaner 222 may have a circular shape as illustrated in FIG. 1, but may be implemented in various shapes without limitation.

In addition, the first cleaner 212 and the second cleaner 222 may be fixed by using a method of covering the first cleaner 212 and the second cleaner 222 on the first liquid storage unit 221 and the second liquid storage unit 221 or a method of using a separate attachment means. For example, the first cleaner 212 and the second cleaner 222 may be attached and fixed to the first liquid storage unit 221 and the second liquid storage unit 221 by using a Velcro tape or the like.

In the robot cleaner 100 according to the exemplary embodiment of the present invention, the first cleaner 212 and the second cleaner 222 rotate by the rotation of the first rotary member 110 and the second rotary member 120, as a result, it is possible to remove the foreign objects adhering to the floor through friction with the surface to be cleaned. Further, when frictional force is generated between the cleaners 212 and 222 and the surface to be cleaned, the frictional force may be used as a moving power source of the robot cleaner 100.

More specifically, in the robot cleaner 100 according to an exemplary embodiment of the present invention, as the first rotary member 110 and the second rotary member 120 rotate, the frictional force is generated between the cleaners 212 and 222 and the surface to be cleaned and a traveling speed and a traveling direction of the robot cleaner 100 may be adjusted according to a magnitude and a direction in which the resultant force acts.

In particular, referring to FIGS. 3 and 4, the first rotary axis 310 and the second rotary axis 320 of the respective first and second rotary members 110 and 120 by the power of the pair of the driving units 151 and 152 may be inclined at a predetermined angle with respect to a central axis 300 corresponding to a vertical axis of the robot cleaner 100. In this case, the first and second rotary members 110 and 120 may be inclined downward outward with respect to the central axis. That is, regions of the first and second rotary members 110 and 120 located away from the central axis 300 among regions of the first and second rotary members 110 and 120 may be strongly adhered to the surface to be cleaned rather than regions located closer to the center axis 300.

Here, the central axis 300 may mean a vertical axis of the robot cleaner 100 with respect to the surface to be cleaned. For example, assuming that the robot cleaner 100 performs cleaning by traveling in an XY plane formed by X and Y axes during a cleaning operation, the center axis 300 may mean a Z axis which is the vertical axis to the surface to be cleaned of the robot cleaner 100.

Meanwhile, the predetermined angle may be a first angle (a degrees) corresponding to an inclined angle of the first rotary axis 310 with respect to the center axis 300 and a second angle (b degrees) corresponding to an angle at which the second rotary axis 320 is inclined with respect to the center axis 300. Here, the first angle and the second angle may be the same as or different from each other.

Further, each of the first angle and the second angle may preferably be an angle within an angular range of 1 to 3 degrees . Here, the angular range described above may be a range to optimally maintain a wet cleaning capability, the traveling speed, and traveling performance of the robot cleaner 100, as shown in Table 1 below.

**[Table 1]**

| Inclined angle | Cleaning capability (based on 3 points) | Traveling speed (based on 3 points) |
|---|---|---|
| Below 1 degree | Cleaning all cleaning surface frictionized with cleaner available (3) | Very slow (0) |
| 1 degree | Cleaning all cleaning surface frictionized with the cleaner available (3) | Slow (1) |
| 1.85 degrees | Cleaning all cleaning surfaces except for a portion adjacent to central axis among the cleaning surfaces frictionized with the cleaner is available (2) | Normal (2) |
| 3 degrees | Cleaning all cleaning surfaces except for a portion adjacent to central axis among the cleaning surfaces frictionized with the cleaner is available (1) | Fast (3) |
| Over 3 degrees | Cleaning all cleaning surfaces except for a portion adjacent to central axis among the cleaning surfaces frictionized with the cleaner is available (0) | Fast (3) |

That is, referring to Table 1 above, since the pair of rotary axes 310 and 320 of the robot cleaner 100 are inclined to have a predetermined angle with respect to the central axis 300, and the traveling speed and the cleaning capability of the robot cleaner 100 may be adjusted. Particularly, by keeping the predetermined angle in the range of 1 to 3 degrees, a wet cleaning ability and the traveling speed of the robot cleaner may be maintained optimally. However, various exemplary embodiments of the present invention may not be limited to the angular ranges described above.

Meanwhile, when the pair of rotary members 110 and 120 rotate according to the predetermined angle, relative frictional force generated between the surface to be cleaned and the cleaners 212 and 222 may be larger on an outer periphery than at the center of the main body 10. Therefore, the traveling speed and the traveling direction of the robot cleaner 100 may be controlled by the relative frictional force generated by controlling the rotation of each of the pair of rotary members 110 and 120. According to the exemplary embodiment of the present invention, the control of the traveling speed and the traveling direction of the robot cleaner 100 will be described below.

Meanwhile, when the robot cleaner 100 travels by the above-described operation, the robot cleaner 100 may collide with various obstacles present on the surface to be cleaned. Here, the obstacle may be various obstacles that hinder cleaning traveling of the robot cleaner 100, which include a low obstacle such as a threshold, a carpet, etc., an obstacle floating at a predetermined height, such as a sofa or bedroom, a high obstacle such as a wall, etc., an obstacle such as the drop point, and the like.

In this case, the bumper 20 formed on an outer circumference of the main body 10 of the robot cleaner 100 may protect the main body 10 from the external impact depending on collision with the obstacle and absorb the external impact. In addition, the distance measuring sensor 130 to be described below may detect an impact applied to the bumper 10.

The bumper 20 may include a first bumper 21 formed on a first outer circumference of the main body 10 and a second bumper 22 formed on a second outer circumference of the main body 10 separately from the first bumper 21. As an example, referring to FIGS. 1 to 4, the first bumper 21 may be formed on a front circumference of the main body 10 based on a direction F which a front surface of the robot cleaner 10 and the second bumper 22 may be formed on a rear circumference of the main body 10 based on a direction F which the front surface faces . However, the present invention is not limited thereto and the bumper 20 may be formed on each of left and right circumferences of the main body 10 based on the direction F which the front surface of the robot cleaner 10 faces.

Here, the first bumper 21 and the second bumper 22 may be implemented as physically separate different bumpers. Accordingly, the bumpers of the robot cleaner may operate independently of each other. That is, when the first bumper 21 collides with the obstacle while the robot cleaner 100 travels, the first bumper 21 may absorb the external impact and transmit the absorbed external impact to a distance measuring sensor installed to correspond to the first bumper 21. However, the second bumper 22 is implemented as a bumper physically separate from the first bumper 21, and as a result, a distance measuring sensor which is not affected by the collision, but is installed to correspond to the second bumper 22 may not receive the external impact.

Meanwhile, in the above example, it is described that the bumper 20 is divided into two as an example, but the bumper 20 is not limited thereto and according to another implementation example, the bumper 20 may not be divided or may be divided into three or more.

Further, according to an exemplary embodiment of the present invention, heights of an upper end and a lower end of the bumper 20 are formed to meet a predetermined condition, and as a result, the robot cleaner 100 may detect various obstacles which the robot cleaner 100 meets during traveling. This will be described in detail with reference to FIG. 4.

Referring to FIG. 4, the lower ends of the first bumper 21 and the second bumper 22 may be formed as close as possible to the surface to be cleaned. Specifically, distances between the lower ends of the first and second bumpers 21 and 22 and the surface to be cleaned may be equal to thicknesses of the cleaners 212 and 222 or may be smaller than thicknesses of the cleaners 212 and 222. As a result, since the first bumper 21 and the second bumper 22 collide even with the low obstacle such as a shallow threshold, a carpet, etc., the robot cleaner 100 may detect and avoid the low obstacle.

Further, the upper ends of the first and second bumpers 21 and 22 may be formed to prevent a case in which the obstacle is suspended only on the main body 10 while the obstacle does not collide with the bumpers 21 and 22. Specifically, the heights of the upper ends of the first and second bumpers 21 and 22 may be equal to the height of the main body 10 or higher than the height of the main body 10. As a result, the first and second bumpers 21 and 22 collide even with the obstacle floating at the predetermined height, such as the sofa or bed to prevent the case in which the obstacle is suspended only on the main body 10 while the obstacle does not collide with the bumpers 21 and 22.

Meanwhile, according to an exemplary embodiment of the present invention, the liquid storage units 211 and 221 of the robot cleaner 100 may include guide units 213 and 223 that guide the cleaners 212 and 222 to be fixed to an optimal location.

If the cleaners 212 and 222 are not fixed at the optimal locations, portions of the cleaners 212 and 222 contacting the surface to be cleaned are changed by the rotation of the first rotary member 110 and the second rotary member 120, which causes an unbalanced state for the pair of cleaners 212 and 222. In this case, the robot cleaner 100 may not perform desired traveling. For example, the robot cleaner 100 in a straight-ahead cleaning mode may not perform straight traveling, but may be bent to a curve.

Therefore, according to an exemplary embodiment of the present invention, a lower surface on which the cleaners 212 and 222 are fixed in each of the liquid storage units 211 and 221 may include guide units 213 and 223 that protrude toward the surface to be cleaned along a rim of the lower surface and guides the cleaners 212 and 222 to be fixed to the optimal locations. Accordingly, the user of the robot cleaner 100 may fix the cleaners 212 and 222 to their optimal locations.

Meanwhile, the distance measuring sensor 130 may sense a distance to an object positioned below the sensor 130. Here, the distance measuring sensor 130 may be an optical sensor that irradiates light downward and senses a distance from the object positioned below the sensor based on the irradiated light. Such an optical sensor may sense the distance from the object positioned below the sensor 130 using an infrared ray, a laser, or the like. However, the distance measuring sensor 130 is not limited to the above-described example. According to another implementation example, the distance measuring sensor 130 may be implemented as a RAdio Detecting And Ranging (radar) sensor using radio waves, an ultrasonic sensor using ultrasonic waves, or the like.

The distance measuring sensor 130 may be implemented as a plurality of distance measuring sensors installed at locations corresponding to a plurality of bumpers 21 and 22 to detect movement of each of the plurality of bumpers 21 and 22. As an example, when the distance measuring sensor 130 is implemented by two bumpers 21 and 22, the distance measuring sensor 130 may include at least one first distance measuring sensor installed in the main body 10 or the first bumper 21 in order to detect the movement of the first bumper 21 and at least one second distance measuring sensor installed in the main body 10 or the second bumper 22 for detecting the movement of the second bumper 22. Such a distance measuring sensor 130 may transmit a detection result to a control unit 170.

In addition, the control unit 170 may determine a traveling state of the robot cleaner 100 as one of an obstacle collision state, a drop point adjacent state, and a normal traveling state by using distance information of the distance measuring sensor 130. When the traveling state is determined as the obstacle collision state, the control unit 170 determines a collision location in an area of the bumper 20, which collides with the obstacle by using the distance information of the distance measuring sensor 130 and control a first driving unit 151 and a second driving unit 152 so as to avoid the obstacle based on the determined collision location.

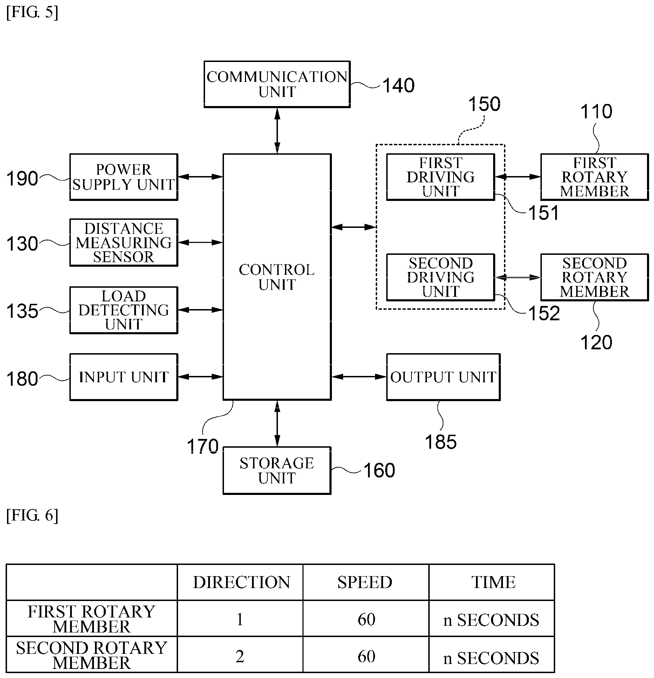

FIG. 5 is a block diagram illustrating a robot cleaner according to an exemplary embodiment of the present invention. Referring to FIG. 5, the robot cleaner 100 according to the exemplary embodiment of the present invention may be configured to include a distance measuring sensor 130, a load detecting unit 135, a communication unit 140, a driving unit 150 for driving the first rotary member 110 and the second rotary member 120, a storage unit 160, a control unit 170, an input unit 180, an output unit 185, and a power supply unit 190.

The load detecting unit 135 may detect loads applied to the first rotary member 110 and the second rotary member 120, respectively in accordance with the traveling of the robot cleaner 100. As an example, when the first cleaner 212 of the robot cleaner 100 contacts the foreign materials including the stains, the water, and the like positioned on the surface to be cleaned during the traveling of the robot cleaner 100, a large load may be generated in the first rotary member 110 to which the first cleaner 212 is attached. As another example, when the second cleaner 222 of the robot cleaner 100 contacts the foreign materials including the stains, the water, and the like positioned on the surface to be cleaned during the traveling of the robot cleaner 100, the large load may be generated in the second rotary member 120 to which the second cleaner 222 is attached. That is, in order to cope with various cleaning environments that may occur during the wet cleaning traveling of the robot cleaner 100, the load detecting unit 135 may detect the loads applied to the first rotary member 110 and the second rotary member 120, respectively according to the traveling of the robot cleaner 100.

The load detecting unit 135 may include a first load detecting unit acquiring a first load value applied to the first rotary member 110 and a second load detecting unit acquiring a second load value applied to the second rotary member 120. Here, the first load value may be a load current value of a first motor that provides driving force for driving the first rotary member 110 and the second load value may be a load current value of a second motor that provides the driving force for driving the second rotary member 120. That is, the load detecting unit 135 may be implemented as a means for detecting the load current value of the motor.

However, this is only an exemplary embodiment of the present invention and the load detecting unit 135 may calculate the load value using data other than the load current value applied to the motor. More specifically, according to another exemplary embodiment of the present invention, the load detecting unit 135 may calculate the load value by comparing differences between rotating speeds of the rotary members 110 and 120 requested according to a control signal of the control unit 170 and actually output rotating speeds of the rotary members 110 and 120.

On the other hand, the load detecting unit 135 may calculate a first average load value based on the first load value obtained for a predetermined time and calculate a second average load value based on the second load value obtained for the predetermined time. As an example, the load detecting unit 135 may calculate an average load current value based on 30 to 50 load current values collected in the past based on a current time.

In this case, the control unit 170 may control the rotation of at least one of the first rotary member 110 and the second rotary member 120 based on the load detected by the load detecting unit 135. As an example, by controlling at least one of the rotating directions and the rotating speeds of the rotary members 110 and 120 in accordance with the magnitude of the load applied to the rotary member, the control unit 170 may control to remove the foreign objects on the surface to be cleaned which generates the large load on the rotary member such as the stains, the water, and the like on the surface to be cleaned, which the robot cleaner 100 may meet while traveling and to escape from an area where the foreign objects are positioned. As another example, the control unit 170 controls at least one of the rotating directions and the rotating speeds of the rotary members 110 and 120 according to the magnitude of the load applied to the rotary member to control wet cleaning to be performed while avoiding the obstacle when the robot cleaner 100 is suspended on the obstacle not recognized by the bumper of the robot cleaner 100. As yet another example, the control unit 170 controls at least one of the rotating directions and the rotating speeds of the rotary members 110 and 120 according to the magnitude of the load applied to the rotary member to control the robot cleaner 100 in the straight-ahead cleaning mode to accurately travel.

Meanwhile, the distance measuring sensor 130 may sense the distance to the object positioned below the sensor 130. In addition, the distance measuring sensor 130 may transmit distance information depending on sensing to the control unit 170.

Meanwhile, the communication unit 140 may include one or more modules for enabling wireless communication between the robot cleaner 100 and another wireless terminal or between the robot cleaner 100 and a network in which the another wireless terminal is positioned. For example, the communication unit 140 may communicate with the wireless terminal as a remote control device and may include a short-range communication module or a wireless Internet module for the communication.

An operation state or an operation mode of the robot cleaner 100 may be controlled by a control signal received by the communication unit 140. A terminal controlling the robot cleaner 100 may include, for example, a smart phone, a tablet, a personal computer, a remote controller (a remote control device), and the like which are capable of communicating with the robot cleaner 100.

The driving unit 150 may supply power for rotating the first rotary member 110 and the second rotary member 120 in accordance with the control of the control unit 170. Here, the driving unit 150 may include the first driving unit 151 and the second driving unit 152 and may be implemented to include a motor and/or a gear assembly.

Meanwhile, the storage unit 160 may store a program for the operation of the control unit 170 and temporarily store input/output data. The storage unit 160 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

The input unit 180 may receive a user input for manipulating the robot cleaner 100. In particular, the input unit 180 may receive a user input for selecting a cleaning mode of the robot cleaner 100. Here, the cleaning mode may include an intensive cleaning mode for intensively cleaning a surrounding space based on a current location of the robot cleaner 100, a wall riding cleaning mode for cleaning while traveling along a wall surface, a manual cleaning mode for cleaning while traveling in a direction corresponding to an input value of a direction key of the user, an S-shaped cleaning mode for cleaning while traveling in an S-shaped pattern, a Y-shaped cleaning mode for cleaning while traveling in a Y-shaped pattern, a straight-ahead cleaning mode for cleaning while performing the straight-ahead traveling, an automatic cleaning mode for cleaning by automatically selecting a cleaning mode appropriate to a traveling situation of the robot cleaner among a plurality of cleaning modes, and the like.

The input unit 180 may include a keypad, a dome switch, a touch pad (resistive/capacitive), a jog wheel, a jog switch, a remote controller, and the like.

The output unit 185 which is used for generating an output related to seeing, hearing, etc. may include a display unit, an audio output module, and an alarm unit though not illustrated in the figure.

The display unit 142 displays (outputs) information processed in the robot cleaner 100. For example, when the robot cleaner performing cleaning, a user interface (UI) or a graphic user interface (GUI) indicating a cleaning time, a cleaning method, a cleaning area, and the like related to the cleaning mode may be displayed.

The power supply unit 190 supplies the power to the robot cleaner 100. Specifically, the power supply unit 190 supplies the power to respective constituent functional units of the robot cleaner 100 and when the remaining power is insufficient, the power supply unit 190 may be charged by receiving a charging current. Here, the power supply unit 190 may be implemented as a rechargeable battery.

The control unit 170 generally controls all operations of the robot cleaner 100. Specifically, the control unit 170 may control the driving unit 150 so that the robot cleaner 100 travels in a specific progress direction by rotating at least one of the first and second rotary members 110 and 120.

As an example, when the first rotary member 110 and the second rotary member 120 rotate at the same speed in the same direction, the robot cleaner 100 may perform a motion to rotate in place. That is, the robot cleaner 100 may rotate in place according to the rotating speeds of the first rotary member 110 and the second rotary member 120.

More specifically, when the first rotary member 110 and the second rotary member 120 rotate at the same speed in the same direction, directions in which one end and the other end positioned at relatively opposite sides, respectively based on the center of the main body 10 of the robot cleaner 100 move relative to the surface to be cleaned are opposite to each other. That is, the direction in which one end of the robot cleaner 100 positioned opposite to the first rotary member 110 moves with respect to the surface to be cleaned by the rotation of the first rotary member 110 and the direction in which the other end of the robot cleaner 100 positioned opposite to the second rotary member 120 moves are opposite to each other.

Therefore, the resultant force of the frictional force acting on the robot cleaner 100 may be opposite to each other and act as a rotational force for the robot cleaner 100, so that the robot cleaner 100 may rotate in place.

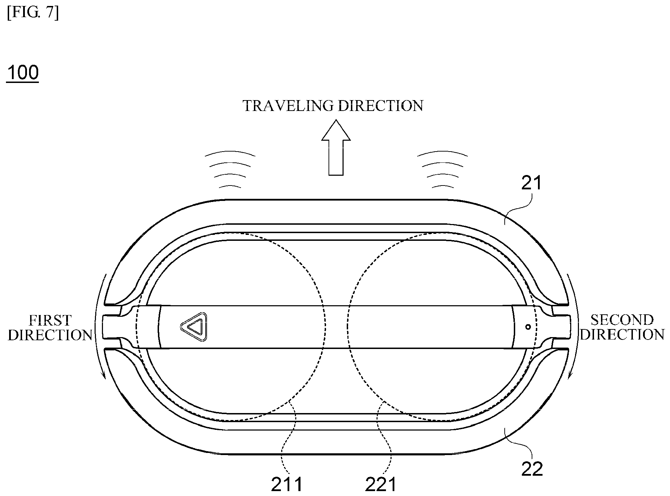

As another example, the control unit 170 may control the driving unit 150 so that the first and second rotary members 110 and 120 rotate at the same speed in different directions. In this case, the direction in which one end moves with respect to the surface to be cleaned by the frictional force of the first rotary member 110 with respect to the main body 10 of the robot cleaner 100 may be same as the direction in which the other end moves with respect to the surface to be cleaned by the frictional force of the second rotary member 110. As a result, the robot cleaner 100 may perform the straight-ahead traveling. This will be described in detail with reference to FIGS. 6 and 7.

FIG. 6 is a table showing a rotation control table of a rotary member for implementing straight traveling of a robot cleaner according to an exemplary embodiment of the present invention. The control unit 170 controls the driving unit 150 based on a rotation control table value stored in the storage unit 160 to perform rotating control of each of the rotary members 110 and 120. The rotation control table may include at least one of a direction value, a speed value, and a time value assigned to each of the rotary members 110 and 120 according to the cleaning mode. As illustrated in FIG. 6, the rotating direction of the first rotary member 110 and the rotating direction of the second rotary member 120 may be different from each other. Further, the rotating speed and the rotating times of the respective rotary members 110 and 120 may have the same values.

The rotating direction of the rotary member and the traveling direction of the robot cleaner 100 according to the exemplary embodiment of the present invention may be described with reference to a direction in which the robot cleaner 100 is viewed from the top. For example, a first direction may refer to a direction in which the robot cleaner 100 rotates counterclockwise in a state in which the robot cleaner 100 is viewed from the top with a progress direction 300 at 12 o'clock. Further, a second direction may refer to a direction in which the robot cleaner 100 rotates clockwise with the progress direction 300 at 12 o'clock as a direction opposite to the first direction. In addition, the traveling direction of the robot cleaner 100 may refer to a direction in which a front surface F of the robot cleaner 100 moves.

When the rotary members 110 and 120 rotate based on the control table illustrated in FIG. 6, the robot cleaner 100 may perform the straight-ahead traveling as illustrated in FIG. 7. Referring to FIG. 7, the robot cleaner 100 according to an exemplary embodiment of the present invention rotates the first rotary member 110 in the first direction and rotates the second rotary member 120 in the second direction different from the first direction to generate relative movement force depending on the frictional force and perform the straight-ahead traveling in the traveling direction.

Meanwhile, inclined directions of the rotary axes 310 and 320 in FIGS. 1 to 7 are merely examples and may be implemented by tilting in different directions according to an implementation example. As an example, the first rotary axis 310 and the second rotary axis 320 of the respective first and second rotary members 110 and 120 may be inclined at angles opposite to the angles in the case of FIGS. 3 and 4 with respect to the central axis 300 corresponding to the vertical axis of the robot cleaner 100. In this case, the first and second rotary members 110 and 120 may be inclined downward outward with respect to the central axis 300. That is, regions of the first and second rotary members 110 and 120 located close to the central axis 300 among regions of the first and second rotary members 110 and 120 may be strongly adhered to the surface to be cleaned rather than regions located away from the center axis 300. In this case, when the pair of rotary members 110 and 120 rotate, relative frictional force generated between the surface to be cleaned and the rotary members may be larger at the center of the main body 10 than on the outer periphery.

Accordingly, contrary to the case of FIGS. 1 to 7, the moving speed and the moving direction of the robot cleaner 100 may be controlled by controlling the rotation of each of the pair of rotary members 110 and 120. Specifically, the robot cleaner 100 rotates the first rotary member 110 in the second direction and rotates the second rotary member 120 in the first direction different from the second direction to generate the relative movement force depending on the frictional force and perform the straight-ahead traveling in the traveling direction.

Meanwhile, the robot cleaner 100 according to an exemplary embodiment of the present invention may have a plurality of cleaning modes. Here, the cleaning mode may include an intensive cleaning mode for intensively cleaning a surrounding space based on a current location of the robot cleaner 100, a wall riding cleaning mode for cleaning while traveling along a wall surface, a manual cleaning mode for cleaning while traveling in a direction corresponding to an input value of a direction key of the user, an S-shaped cleaning mode for cleaning while traveling in an S-shaped pattern, a Y-shaped cleaning mode for cleaning while traveling in a Y-shaped pattern, a straight-ahead cleaning mode for cleaning while performing the straight-ahead traveling, an automatic cleaning mode for cleaning by automatically selecting a cleaning mode appropriate to a current situation of the robot cleaner among a plurality of cleaning modes, and the like.

In this case, the control unit 170 may select at least one of the plurality of cleaning modes of the robot cleaner 100 and may control the driving unit 150 to perform cleaning according to the selected cleaning mode. As an example, when the user input for selecting one of the cleaning modes of the robot cleaner 100 is received through the input unit 180, the control unit 170 may determine the cleaning mode corresponding to the user input among the plurality of cleaning modes as the cleaning mode of the robot cleaner 100.

Meanwhile, when the robot cleaner 100 travels by the above-described operation, the robot cleaner 100 may collide with various obstacles present on the surface to be cleaned. Here, the obstacle may be various obstacles that hinder cleaning traveling of the robot cleaner 100, which include a low obstacle such as a threshold, a carpet, etc., an obstacle floating at a predetermined height, such as a sofa or bedroom, a high obstacle such as a wall, etc., and the like. When the robot cleaner 100 collides with the obstacle, the bumpers 21 and 22 formed on the outer circumference of the main body 10 of the robot cleaner 100 move inward to protect the main body 10 from the external impact depending on collision with the obstacle and absorb the external impact.

Further, when the robot cleaner 100 travels by the above-described operation, the robot cleaner 100 may be adjacent to the drop point such as a cliff, etc.

On the other hand, as described above, when the robot cleaner 100 may not detect whether the robot cleaner 100 collides with the obstacle while the robot cleaner 100 collides with the obstacle, a problem may occur, in which the robot cleaner 100 may not avoid the obstacle and may not thus continue the cleaning traveling. In addition, when the robot cleaner 100 may not detect whether the robot cleaner 100 is adjacent to the drop point while the robot cleaner 100 is adjacent to the drop point, the robot cleaner 100 may not avoid the drop point and drops, and as a result, there is a product damage risk and the cleaning traveling may not be continued.

As a result, the robot cleaner 100 according to an exemplary embodiment of the present invention may determine the traveling state of the robot cleaner 100 as one state of the obstacle collision state, the drop point adjacent state, and the normal traveling state by using the distance information of the distance measuring sensor 130.

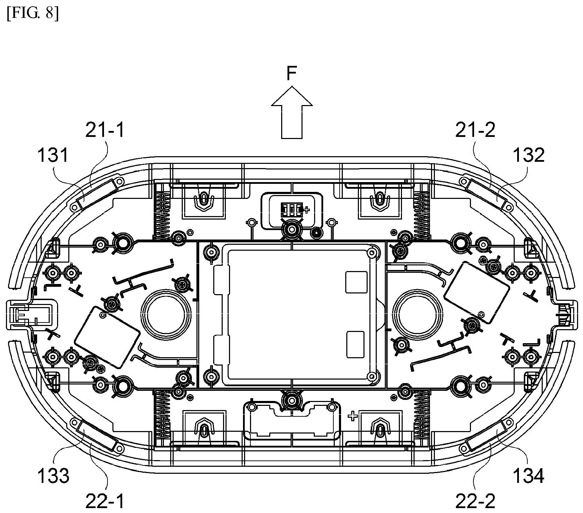

Hereinafter, the traveling control of the robot cleaner 100 using the distance information of the distance measuring sensor 130 will be described in more detail with reference to FIGS. 8 to 13. In the description of FIGS. 8 to 13, for convenience of explanation, a case where the distance measuring sensor is implemented as the optical sensor will be described as an example.

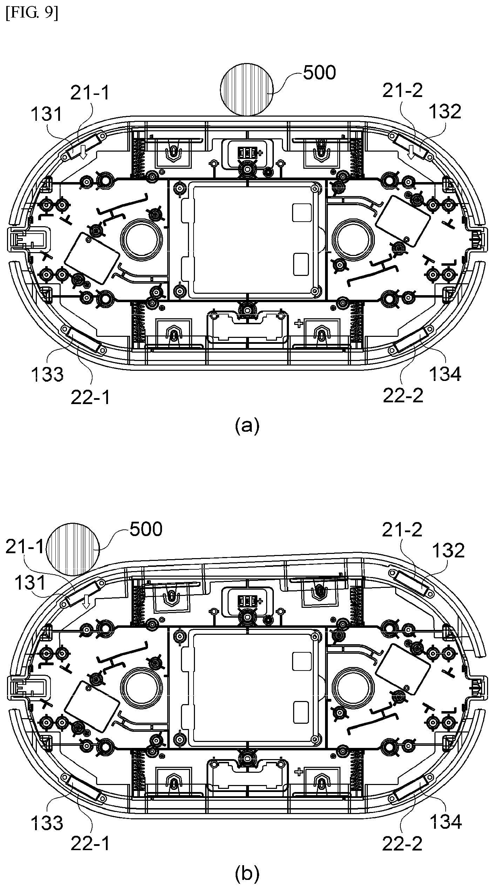

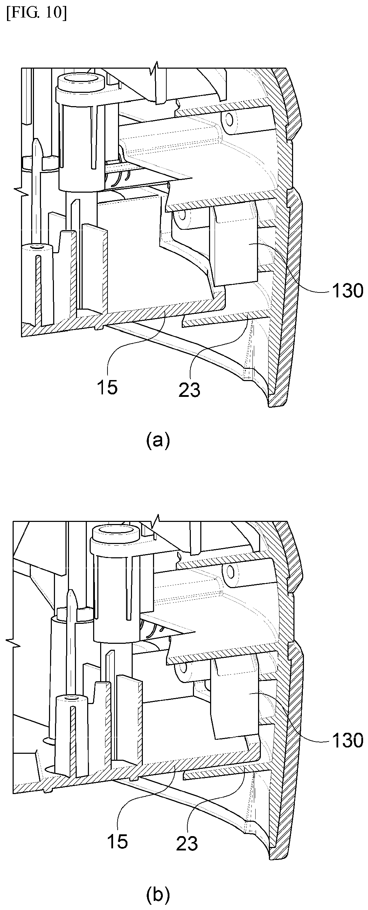

FIG. 8 is a plan cross-sectional view illustrating an installation location of an optical sensor of a robot cleaner according to an exemplary embodiment of the present invention. FIG. 9 is a plan cross-sectional view illustrating operations of a bumper and an optical sensor depending on whether a robot cleaner and an obstacle collide with each other according to an exemplary embodiment of the present invention. FIG. 10 is a front cross-sectional view illustrating operations of a bumper and an optical sensor depending on whether a robot cleaner and an obstacle collide with each other according to an exemplary embodiment of the present invention. Referring to FIGS. 8 to 10, the robot cleaner 100 may include a plurality of optical sensors 130 for irradiating light downward and sensing a distance to an object positioned below the sensor based on the irradiated light. As an example, the robot cleaner 100 may include a first optical sensor 131 formed on a front left side, a second optical sensor 132 formed on a right front side, a third optical sensor 133 formed on a left rear side, and a fourth optical sensor 134 formed on a right rear side based on a direction which a front surface F of the robot cleaner faces . Here, the number of optical sensors is not limited to the above-described example. Depending on the implementation example, the optical sensor may be implemented as one or two or more.

Meanwhile, the first optical sensor 131, the second optical sensor 132, the third optical sensor 133, and the fourth optical sensor 134 may be installed in the bumpers 21 and 22. Specifically, each of the bumpers 21 and 22 may be constituted by an outer surface formed on the outer side and an inner surface formed on the inner side and a bumper-side sensor accommodating unit for accommodating the optical sensor 130 may be formed on an inner surface of each of the bumpers 21 and 22. As an example, a first bumper-side first sensor accommodating unit 21-1 for receiving the first optical sensor 131 may be formed on the left inner surface of the first bumper 21, a first bumper-side second sensor accommodating unit 21-2 for accommodating the second optical sensor 131 may be formed on the right inner surface of the first bumper 21, a second bumper-side third sensor accommodating unit 22-1 for accommodating the third optical sensor 133 may be formed on the left inner surface of the second bumper 22, and a second bumper-side fourth sensor accommodating unit 22-2 for accommodating the fourth optical sensor 134 may be formed on the right inner surface of the second bumper 22.

In this case, the optical sensors 131, 132, 133, and 134 installed in the bumper-side sensor accommodating units 21-1, 21-2, 22-1, and 22-2 may move in association with the movement of the bumpers 21 and 22. That is, the first optical sensor 131 and the second optical sensor 132 installed in the accommodating units 21-1 and 21-2 of the first bumper move in association with the movement of the first bumper 21 and the third optical sensor 133 and the fourth optical sensor 134 installed in the accommodating units 22-1 and 22-2 of the second bumper may move in conjunction with the movement of the second bumper 22.

As an example, when the bumpers 21 and 22 collide with the obstacle, the bumpers 21 and 22 may move inward toward the main body 10. In this case, the optical sensors 131, 132, 133, and 134 installed in the bumper-side sensor accommodating units 21-1, 21-2, 22-1, and 22-2 may move inward toward the main body 10 in conjunction with the movement of the bumpers 21 and 22. As another example, when the bumpers 21 and 22 are out of the collision state with the obstacle, the bumpers 21 and 22 may move to an initial location toward the outside under the influence of a tension member such as a spring installed inside. In this case, the optical sensors 131, 132, 133, and 134 installed in the bumper-side sensor accommodating units 21-1, 21-2, 22-1, and 22-2 may move to the initial location toward the outside in conjunction with the movement of the bumpers 21 and 22. This will be described in more detail with reference to FIG. 9.

For example, as illustrated in 9A, when a center portion of the first bumper 21 collides with an obstacle 500, a left side of the first bumper 21 and a right side of the first bumper 21 may move inward toward the main body 10 by the same distance. In this case, the first optical sensor 131 installed in the first bumper-side first sensor accommodating unit 21-1 and the second optical sensor 132 installed in the first bumper-side second sensor accommodating portion 21-2 may move inward toward the main body 10 by the same distance.

As another example, as illustrated in 9B, when a left portion of the first bumper 21 collides with the obstacle 500, only the left side of the first bumper 21 may move inward toward the main body 10. In this case, only the first optical sensor 131 installed in the first bumper-side first sensor accommodating unit 21-1 may move inward toward the main body 10.

On the other hand, the optical sensor 130 continuously irradiates light downward and senses a distance to the object positioned below the sensor 130 based on the irradiated light and sensing data of the sensor 130 may vary depending on the movement of the bumpers 21 and 22. This will be described in more detail with reference to FIG. 10.

FIG. 10 is a diagram illustrating a positional relationship between the optical sensor 130, and a main body bottom surface 15 and the bumper-side projection member 23 depending on the movement of the bumpers 21 and 22 of the robot cleaner 10 according to an exemplary embodiment of the present invention. Since a structure illustrated in FIG. 10 may be equally applied to a front left area, a front right area, a rear left area, and a rear right area of the robot cleaner 10, the structure will be described with the optical sensor 130 which collectively refers to the first optical sensor 131, the second optical sensor 132, the third optical sensor 133, and the fourth optical sensor 134.

Referring to FIG. 10, the main body bottom surface 15 may be formed with a light non-penetrating member of a material through which the light of the optical sensor 130 may not penetrate. As an example, the entirety of the main body bottom surface 15 may be made of the material through which the light may not penetrate. As another example, only an area on the main body bottom surface 15, which the light is irradiated depending on the movement of the optical sensor 130 may be made of the material through which the light may not penetrate. In addition, a light penetrating member 23 of a material through which the light of the optical sensor 130 may penetrate may be projected inward toward the main body 10 at a lower end of the bumper-side sensor accommodating unit.

As a result, as illustrated in FIG. 10A, when the bumpers 21 and 22 do not collide with the obstacle during traveling of the robot cleaner 100 and thus maintain the initial locations, the optical sensor 130 may irradiate the light onto a floor surface by penetrating a light penetrating member 23 and sense a distance between the optical sensor 130 and the floor surface based on the light irradiated onto the floor surface.

However, as illustrated in FIG. 10B, when the bumpers 21 and 22 collide with the obstacle and thus move inward toward the main body 10 while the robot cleaner 100 travels, the optical sensor 130 moves inward toward the main body 10 and is positioned above the light non-penetrating member 15 (that is, the main body bottom surface) and the optical sensor may sense a distance between the light non-penetrating member 15 and the optical sensor 130.

Meanwhile, unlike the exemplary embodiment of FIGS. 8 to 10 above, the first optical sensor 131, the second optical sensor 132, the third optical sensor 133, and the fourth optical sensor 134 may be installed in the main body 10. Specifically, the main body 10 may be provided with a main body-side sensor accommodating unit for accommodating the optical sensor. As an example, a main body-side first sensor accommodating unit for accommodating the first optical sensor 131 may formed on the front left side of the main body 10, a main body-side second sensor accommodating unit for accommodating the second optical sensor 132 may be formed on the front right side of the main body 10, a main body-side third sensor accommodating unit for accommodating the third optical sensor 133 may be formed on the rear left side of the main body 10, and a main body-side fourth sensor accommodating unit for accommodating the fourth optical sensor 134 may be formed on the rear right side of the main body 10.

In this case, the optical sensors 131, 132, 133, and 134 installed in the main body-side sensor accommodating unit may not move in conjunction with the movement of the bumpers 21 and 22. As an example, when the bumpers 21 and 22 collide with the obstacle, the bumpers 21 and 22 may move inward toward the main body 10, but the optical sensors 131, 132, 133, and 134 installed in the main body-side sensor accommodating unit may maintain the existing installation locations. As another example, when the bumpers 21 and 22 are out of the collision state with the obstacle, the bumpers 21 and 22 may move to the initial locations toward the outside under the influence of the tension member such as the spring installed inside, but the optical sensors 131, 132, 133, and 134 installed in the main body-side accommodating unit may maintain the existing installation locations.

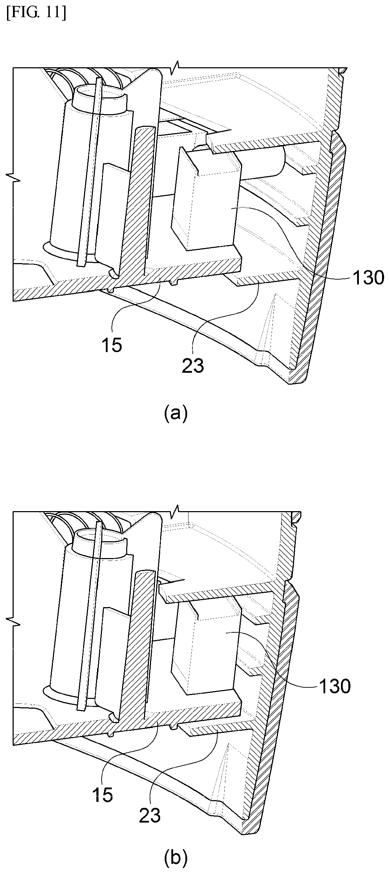

On the other hand, the optical sensor 130 continuously irradiates light downward and senses a distance to the object positioned below the sensor 130 based on the irradiated light and sensing data of the sensor 130 may vary depending on the movement of the bumpers 21 and 22. This will be described in more detail with reference to FIG. 11.

FIG. 11 is a diagram illustrating a positional relationship between the optical sensor 130, and a main body bottom surface 15 and the bumper-side projection member 23 depending on the movement of the bumpers 21 and 22 of the robot cleaner 10 according to another exemplary embodiment of the present invention. Since a structure illustrated in FIG. 11 may be equally applied to a front left area, a front right area, a rear left area, and a rear right area of the robot cleaner 10, the structure will be described with the optical sensor 130 which collectively refers to the first optical sensor 131, the second optical sensor 132, the third optical sensor 133, and the fourth optical sensor 134.

Referring to FIG. 11, the light non-penetrating member 23 of the material through which the light of the optical sensor 130 may not penetrate may be projected inward toward the main body 10 at the lower ends of the bumpers 21 and 22. In addition, the main body bottom surface 15 may be formed with the light penetrating member of the material through which the light of the optical sensor 130 may penetrate. As an example, the entirety of the main body bottom surface 15 may be made of the material through which the light may penetrate. As another example, only the area on the main body bottom surface 15, which the light of the optical sensor 130 is irradiated may be made of the material through which the light may penetrate.

As a result, as illustrated in FIG. 11A, when the bumpers 21 and 22 do not collide with the obstacle during traveling of the robot cleaner 100 and thus maintain the initial locations, the optical sensor 130 may irradiate the light onto the floor surface by penetrating the light penetrating member 15 formed on the main body bottom surface 15 and sense the distance between the optical sensor 130 and the floor surface based on the light irradiated onto the floor surface.

However, as illustrated in FIG. 11B, when the bumpers 21 and 22 collide with the obstacle and thus move inward toward the main body 10 while the robot cleaner 100 travels, the light non-penetrating member 23 installed on inner surfaces of the bumpers 21 and 22 moves inward toward the main body 10 and is positioned below the optical sensor 130 and the optical sensor 130 may sense the distance between the light non-penetrating member 23 and the optical sensor 130.

Meanwhile, in FIGS. 8 to 11, it is described as an example that the optical sensors 131, 132, 133, and 134 are installed in the main body 10 or the bumpers 21 and 22, but the present invention is not limited thereto. According to an implementation example, some of the first optical sensor 131, the second optical sensor 132, the third optical sensor 133, and the fourth optical sensor 134 may be installed in the bumpers 21 and 22 and the remaining sensors may be installed in the main body 10.

Meanwhile, the control unit 170 may control the driving unit 150 to avoid a predetermined object or to maintain the traveling state according to the distance information sensed by the optical sensor 130 while the robot cleaner 100 travels. Here, the predetermined object may include the obstacle and the drop point.

Specifically, the control unit 170 may determine a traveling state of the robot cleaner as one of an obstacle collision state, a drop point adjacent state, and a normal traveling state by using distance information sensed by the optical sensor 130. That is, a fact that the distance information sensed by the optical sensor 130 is within a first numerical range which is the smallest may mean that the bumpers 21 and 22 of the robot cleaner 100 and the obstacle collide with each other and the distance between the optical sensor 130 and the light non-penetrating member is sensed. In addition, a fact that the distance information sensed by the optical sensor 130 is within a second numerical range which is larger than the first numerical range may mean that the bumpers 21 and 22 of the robot cleaner 100 and the obstacle do not collide with each other and the distance between the optical sensor 130 and the surface to be cleaned (the floor surface where the robot cleaner perform cleaning traveling) is sensed. In addition, a fact that the distance information sensed by the optical sensor 130 is within a third numerical range which is larger than the second numerical range may mean that the robot cleaner 100 is adjacent to the drop point and the distance between the optical sensor 130 and a drop surface (a floor surface which the robot cleaner reaches when dropping from the drop point) other than the surface to be cleaned (the floor surface where the robot cleaner perform cleaning traveling) is sensed. The control unit 170 may determine the traveling state of the robot cleaner 100 using such a difference in sensing information of the optical sensor 130.

Specifically, when the robot cleaner 100 starts traveling, the control unit 170 calculates a distance value based on the sensing information of the optical sensor 130 and compares the calculated distance value with a reference value to determine whether the robot cleaner is in the obstacle collision state, in the drop point adjacent state, or in the normal traveling state. In this case, the control unit 170 calculates the distance value for each of the plurality of optical sensors 131, 132, 133, and 134 based on the sensing information of each of the plurality of optical sensors 131, 132, 133, and 134 and compares the calculated distance value with the reference value to determine which part of the robot cleaner 100 collides with the obstacle or which part of the robot cleaner 100 is adjacent to the drop point.

As an example, when the calculated distance value is equal to a predetermined reference value, the control unit 170 may determine that the robot cleaner is in the normal traveling state. In addition, when the calculated distance value is smaller than the predetermined reference value, the control unit 170 may determine that the robot cleaner 100 is in the obstacle collision state. Further, when the calculated distance value is larger than the predetermined reference value, the control unit 170 may determine that the robot cleaner 100 is in the drop point adjacent state.

Here, the reference value may be a value calculated according to a distance value between the optical sensor 130 and the floor surface at the location of the robot cleaner 100 when power is applied to the robot cleaner 100. Alternatively, the reference value may be calculated in accordance with the distance value acquired by the optical sensor 130 during the normal traveling during a predetermined period from the time when the power is applied to the robot cleaner 100 (that is, a period until the robot cleaner 100 collides with the obstacle and is adjacent to the drop point) . Such a reference value may be implemented in the form of the numerical range. That is, since the reference value for determining the obstacle, the drop point, and the normal traveling may vary depending on a state of the surface to be cleaned, on which the robot cleaner 100 performs cleaning traveling, an installation location of the optical sensor 130, and coupling states of the cleaners 212 and 222 and the liquid storage units 211 and 221, the control unit 170 may set the reference value before the robot cleaner 100 starts the operation.

Meanwhile, when it is determined that the robot cleaner 100 collides with the obstacle or is adjacent to the drop point, the control unit 170 may control the robot cleaner 100 to avoid the obstacle or the drop point. Specifically, when it is determined that the robot cleaner 100 collides with the obstacle or is adjacent to the drop point, the robot cleaner 100 may switch to a direction to avoid the obstacle or the drop point and determine whether the obstacle or the drop point is positioned while traveling in the switched direction. In addition, the control unit 170 controls the rotation of at least one of the first and second rotary members 110 and 120 to control the robot cleaner 100 to avoid the obstacle positioned in the traveling direction of the robot cleaner 100 and perform traveling.

Here, there are several schemes for rotation control for the control unit 170 to switch the robot cleaner 100 in the direction of avoiding the obstacle or drop point. For example, the control unit 170 equally controls the rotating directions and the rotating speeds of the first and second rotary members 110 and 120 to control the robot cleaner 100 to rotate in place for a predetermined time in a direction away from the direction in which the obstacle or the drop point is detected.

Further, when the obstacle or drop point is relatively close to a specific rotary member in the detected direction, for example, the first rotary member 110, the control unit 170 may control the robot cleaner 100 to rotate in the direction away from the obstacle by rotating the first rotary member 110 in a direction opposite to a current direction for a predetermined time while stopping the rotation of the second rotary member 110.

In addition, when the obstacle or drop point is detected in front of both the first rotary member 110 and the second rotary member 120, the control unit 170 rotates both the first rotary member 110 and the second rotary member 120 in a direction different from the current direction to reversely switch the progress direction.

In addition, the control unit 170 may select a specific direction other than a direction in which the obstacle or the drop point is detected and reset the selected direction as the traveling direction. In this case, the specific direction may be a random direction excluding the direction in which the obstacle or the drop point is detected or a direction determined according to the predetermined movement path, depending on the direction change result.

Meanwhile, when it is determined that the robot cleaner 100 is in the normal traveling state, the control unit 170 may control to select one of the plurality of cleaning modes. Specifically, when it is determined that the robot cleaner does not collide with the obstacle and is not adjacent to the drop point, but is in the normal traveling state, the control unit 170 may determine one of the plurality of cleaning modes and travel in the determined cleaning mode. In this case, the control unit 170 controls at least one of the rotating direction and the rotating speed of at least one of the first and second rotary members 110 and 120 to control the robot cleaner 100 to travel in the determined cleaning pattern. Here, the cleaning mode may include an intensive cleaning mode for intensively cleaning a surrounding space based on a current location of the robot cleaner 100, a wall riding cleaning mode for cleaning while traveling along a wall surface, a manual cleaning mode for cleaning while traveling in a direction corresponding to an input value of a direction key of the user, an S-shaped cleaning mode for cleaning while traveling in an S-shaped pattern, a Y-shaped cleaning mode for cleaning while traveling in a Y-shaped pattern, a straight-ahead cleaning mode for cleaning while performing the straight-ahead traveling, an automatic cleaning mode for cleaning by automatically selecting a cleaning mode appropriate to the traveling situation of the robot cleaner among a plurality of cleaning modes, and the like.

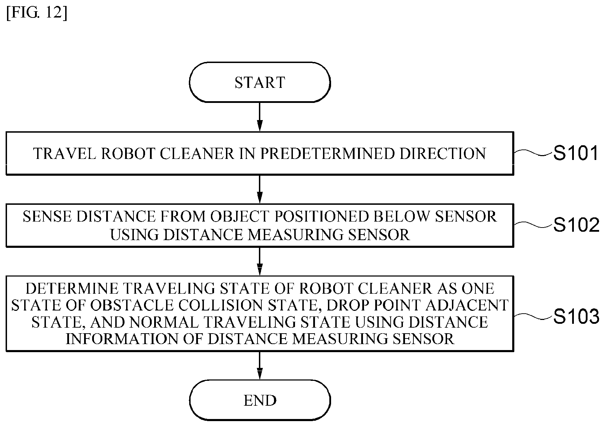

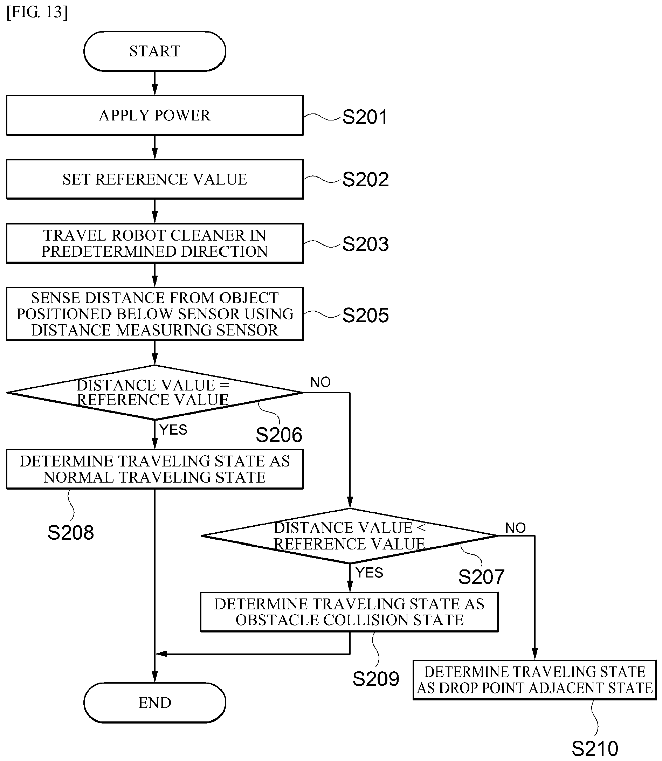

Meanwhile, a driving control method of the robot cleaner 100 according to an exemplary embodiment of the present invention will be described in more detail with reference to FIGS. 12 and 13.

FIG. 12 is a flowchart illustrating a driving control method of a robot cleaner according to an exemplary embodiment of the present invention. Referring to FIG. 12, the robot cleaner 100 may be made to travel in a predetermined direction using the driving unit 150 that supplies power for traveling (S101) .

In addition, the robot cleaner 100 may sense the distance from the object positioned below the sensor by using the distance measuring sensor 130 while traveling (S102) . Here, the distance measuring sensor 130 may be an optical sensor that irradiates light downward and senses a distance from the object positioned below the sensor based on the irradiated light. Such a distance measuring sensor may be installed in the main body 10 or installed in the bumpers 21 and 22.

In addition, a traveling state of the robot cleaner 100 may be determined as one of an obstacle collision state, a drop point adjacent state, and a normal traveling state by using distance information of the distance measuring sensor 130. Specifically, when the robot cleaner 100 starts traveling, a distance value up to the object is calculated based on the sensing information of the distance measuring sensor and the calculated distance value is compared with a reference value to determine whether the robot cleaner 100 is in the obstacle collision state, in the drop point adjacent state, or in the normal traveling state. This will be described in more detail with reference to FIG. 13.

FIG. 13 is a flowchart more specifically illustrating the driving control method according to FIG. 12. Referring to FIG. 13, when power is applied to the robot cleaner 100 (S201), a distance value between the optical sensor and the floor surface is calculated to set a reference value for traveling and avoiding (S202). Here, the application of the power may mean that a power supply button of the robot cleaner 100 is turned on and power supply of the power supply unit 190 starts.

Thereafter, when a cleaning command is inputted from the user and the robot cleaner 100 starts traveling, the robot cleaner 100 may be made to travel using the driving unit 150 that supplies power for traveling (S203).

In this case, the robot cleaner 100 may calculate a distance value to the object positioned below the sensor 130 based on the sensing information of the optical sensor 130 (S205) and compare the calculated distance value and the reference value set in step S202 (S206). Here, the reference value may be implemented in the form of the numerical range.

When the calculated distance value is equal to a predetermined reference value (S206: Y), it may be determined that the robot cleaner 100 is in the normal traveling state (S208).

In addition, when the calculated distance value is smaller than the predetermined reference value (S207: Y), it may be determined that the robot cleaner 100 is in the obstacle collision state (S209).

Further, when the calculated distance value is larger than the predetermined reference value (S207: N), it may be determined that the robot cleaner 100 is in the drop point adjacent state (S210).

Meanwhile, when it is determined that the robot cleaner 100 collides with the obstacle or is adjacent to the drop point, the robot cleaner 100 may be controlled to avoid the obstacle or the drop point. Further, when it is determined that the robot cleaner 100 is in the normal traveling state, one of the plurality of cleaning modes may be controlled to be selected.

According to various exemplary embodiments of the present invention, since it may be determined whether the robot cleaner collides with the obstacle, whether the robot cleaner is adjacent to the drop point, and whether the robot cleaner normally travels using the distance measuring sensor having a single function to detect the distance up to the target, it is possible to reduce costs, increase production efficiency, and secure product price competitiveness by minimizing a configuration of the sensor.

Meanwhile, the control method according to various exemplary embodiments of the present invention described above may be implemented as a program code and provided to respective servers or devices in a state in which they are stored in various non-transitory computer readable media.

The non-transitory computer readable medium is not a medium that stores data therein for a while, such as a register, a cache, a memory, or the like, but means a medium that semi-permanently stores data therein and is readable by a device. Specifically, various applications or programs described above may be stored and provided in the non-transitory computer readable medium such as a compact disk (CD), a digital versatile disk (DVD), a hard disk, a Blu-ray disk, a universal serial bus (USB), a memory card, a read only memory (ROM), or the like.

Further, although the exemplary embodiments of the present invention have been illustrated and described above, the present invention is not limited to the aforementioned specific embodiments, various modifications may be made by a person with ordinary skill in the technical field to which the present invention pertains without departing from the subject matters of the present invention that are claimed in the claims, and these modifications should not be appreciated individually from the technical spirit or prospect of the present invention.

## Claims

1. A robot cleaner (100) comprising:
a main body (10);
a driving unit (150) provided in the main body (10) and supplying power for traveling of the robot cleaner (100);
a bumper (20) formed on an outer circumference of the main body (10) and protecting the main body (10) from an external impact;
a distance measuring sensor (130) sensing a distance from an object positioned therebelow; and
a control unit (170) determining a traveling state of the robot cleaner (100) as one of an obstacle collision state, a drop point adjacent state, and a normal traveling state by using distance information sensed by the distance measuring sensor (130).

2. The robot cleaner (100) of claim 1, wherein the distance measuring sensor (130) is an optical sensor (130) that irradiates light downward and senses a distance from the object positioned below the sensor based on the irradiated light.

3. The robot cleaner (100) of claim 2, wherein the distance measuring sensor (130) includes a first optical sensor (131) formed at a front left side, a second optical sensor (132) formed at a front right side, a third optical sensor (133) formed at a rear left side, and a fourth optical sensor (134) formed at a rear right side based on a traveling direction of the robot cleaner (100).

4. The robot cleaner (100) of claim 2, wherein the bumper (20) is constituted by an outer surface and an inner surface,
a bumper-side sensor accommodating unit for accommodating the optical sensor is formed on the inner surface of the bumper (20), and
the optical sensor installed in the bumper-side sensor accommodating unit moves in conjunction with movement of the bumper (20).

5. The robot cleaner (100) of claim 4, wherein a light non-penetrating member of a material through which the light of the optical sensor (130) is not able to penetrate is formed on a bottom surface of the main body (10), and
when the bumper (20) collides with an obstacle and moves inward toward the main body (10) while the robot cleaner (100) travels, the optical sensor (130) moves inward toward the main body (10) and is positioned above the light non-penetrating member and the optical sensor (130) senses a distance between the light non-penetrating member and the optical sensor (130) .

6. The robot cleaner (100) of claim 5, wherein a light penetrating member of a material through which the light of the optical sensor (130) is able to penetrate is projected inward on a lower end of the bumper-side sensor accommodating unit, and
when the bumper (20) does not collide with the obstacle and maintains an initial location while the robot cleaner (100) travels, the optical sensor (130) irradiates the light onto a floor surface by penetrating the light penetrating member and senses a distance between the optical sensor (130) and the floor surface based on the light irradiated onto the floor surface.

7. The robot cleaner (100) of claim 2, wherein a main body-side sensor accommodating unit for accommodating the optical sensor (130) is formed in the main body (10), and the optical sensor (130) installed in the main body-side sensor accommodating unit does not move in conjunction with movement of the bumper (20).

8. The robot cleaner (100) of claim 7, wherein the light penetrating member of a material through which the light of the optical sensor (130) is able to penetrate is formed on a bottom surface of the main body (10), and
when the bumper (20) does not collide with the obstacle and maintains the initial location while the robot cleaner (100) travels, the optical sensor (130) irradiates the light onto the floor surface by penetrating the light penetrating member and senses a distance between the optical sensor (130) and the floor surface based on the light irradiated onto the floor surface.

9. The robot cleaner (100) of claim 8, wherein the light non-penetrating member of the material through which the light of the optical sensor (130) is not able to penetrate is formed on the lower end of the bumper (20), and
when the bumper (20) collides with the obstacle and moves inward toward the main body (10) while the robot cleaner (100) travels, the light non-penetrating member moves inward toward the main body (10) and is positioned below the optical sensor (130) and the optical sensor (130) senses a distance between the light non-penetrating member and the optical sensor (130) .

10. The robot cleaner (100) of claim 6 or 9, wherein when power is applied to the robot cleaner (100), the control unit (170) calculates a distance value between the optical sensor (130) and the floor surface at a corresponding location to set a reference for traveling and avoiding.

11. The robot cleaner (100) of claim 10, wherein when the robot cleaner (100) starts traveling, the control unit (170) calculates a distance value up to the object based on sensing information of the optical sensor (130) and compares the calculated distance value and the set reference value to determine whether the robot cleaner (100) is in an obstacle collision state, in a drop point adjacent state, or in a normal traveling state.

12. The robot cleaner (100) of claim 11, wherein the control unit (170)
determines that the robot cleaner (100) is in the normal traveling state when the calculated distance value is equal to the predetermined reference value,
determines that the robot cleaner (100) is in the obstacle collision state when the calculated distance value is smaller than the predetermined reference value, and
determines that the robot cleaner (100) is in the drop point adjacent state when the calculated distance value is larger than the predetermined reference value.

13. The robot cleaner (100) of claim 1, wherein the bumper (20) includes
a first bumper (20) formed on a first outer circumference of the main body (10), and
a second bumper (20) formed on a second outer circumference of the main body (10) separately from the first bumper (20).

14. The robot cleaner (100) of claim 11, wherein when it is determined that the robot cleaner (100) collides with the obstacle or is adjacent to the drop point, the control unit (170) controls the robot cleaner (100) to avoid the obstacle or the drop point.

15. The robot cleaner (100) of claim 11, wherein when it is determined that the robot cleaner (100) is in the normal traveling state, the control unit (170) controls to select one of a plurality of cleaning modes.

16. The robot cleaner (100) of claim 1, further comprising:
first and second rotary members which rotate around first and second rotary axes (310 and 320), respectively by power of the driving unit (150) and to which cleaners for wet cleaning are fixable, respectively,
when the cleaners for the wet cleaning are fixed to the first and second rotary members, respectively, the robot cleaner (100) is able to travel according to frictional force between a surface to be cleaned and each of the attached cleaners, which is generated according to rotation of each of the fixed cleaners.

17. A robot cleaner (100) comprising:
a driving unit (150) supplying power for traveling of the robot cleaner (100);
an optical sensor (130) irradiating light to a target and sensing a distance from the target; and
a control unit (170) controlling the driving unit (150) to avoid a predetermined object or maintain a traveling state according to distance information of the optical sensor (130) while the robot cleaner (100) travels.

18. The robot cleaner (100) of claim 17, wherein the control unit (170)
controls the driving unit (150) so that the robot cleaner (100) maintains the traveling state when distance information of the optical sensor (130) is within a predetermined distance range, and
controls the driving unit (150) so that the robot cleaner (100) performs avoidance traveling of the predetermined object when the distance information of the optical sensor (130) is out of the predetermined distance range.

19. The robot cleaner (100) of claim 17, wherein the predetermined object includes an object and a drop point.

20. The robot cleaner (100) of claim 17, further comprising:
a bumper (20) formed on an exterior of a main body (10) of the robot cleaner (100) and protecting the main body (10) from external impact and moving inward or outward according to a collision with the obstacle,
wherein the distance information of the optical sensor (130) is changed depending on movement of the bumper (20) .

21. The robot cleaner (100) of claim 20, wherein the optical sensor (130) is installed in the bumper (20), and
when the bumper (20) does not collide with the obstacle and maintains an initial location while the robot cleaner (100) travels, the optical sensor (130) senses a distance between a floor surface and the optical sensor (130) .

22. The robot cleaner (100) of claim 21, wherein when the bumper (20) collides with the obstacle and moves inward toward the main body (10) while the robot cleaner (100) travels, the optical sensor (130) senses a distance between the main body (10) and the optical sensor (130).

23. The robot cleaner (100) of claim 20, wherein the optical sensor (130) is installed in the main body (10), and
when the bumper (20) does not collide with the obstacle and maintains the initial location while the robot cleaner (100) travels, the optical sensor (130) senses the distance between the floor surface and the optical sensor (130) .

24. The robot cleaner (100) of claim 23, wherein when the bumper (20) collides with the obstacle and moves inward toward the main body (10) while the robot cleaner (100) travels, the optical sensor (130) senses the distance between the bumper (20) and the optical sensor (130).
